# EUROPÄISCHE PATENTSCHRIFT

(11) **EP 2 519 593 B1**
(45) Veröffentlichungstag und Bekanntmachung des Hinweises auf die Patenterteilung: **27.04.2016**
(21) Anmeldenummer: 10796079.1
(22) Anmeldetag: 28.12.2010
(51) Int. Cl.: C09D 163/00

(54) **WASSERFREIE ZUSAMMENSETZUNG ALS BESCHICHTUNGSMITTEL FÜR FUNKTIONSSCHICHTEN EINER MEHRSCHICHTLACKIERUNG**
ANHYDROUS COMPOSITION AS A COATING AGENT FOR FUNCTIONAL LAYERS OF A MULTILAYER PAINT
COMPOSITION SANS EAU EN TANT QU'AGENT DE REVÊTEMENT POUR DES COUCHES FONCTIONNELLES D'UNE PEINTURE MULTICOUCHE

(30) Priorität: 31.12.2009 DE 102009060803
(43) Veröffentlichungstag der Anmeldung: 07.11.2012
(73) Patentinhaber: BASF Coatings GmbH, 48165 Münster (DE)
(72) Erfinder: LAVALAYE, Jorn, 97082 Würzburg (DE); LÖW, Norbert, 91413 Neustadt/Aisch (DE)
(74) Vertreter: Leifert & Steffan
(86) Internationale Anmeldenummer: PCT/EP2010/070796
(87) Internationale Veröffentlichungsnummer: WO 2011/080268

(56) Entgegenhaltungen:
- WO-A1-2005/007762
- WO-A2-2005/063897
- DE-A1- 19 810 220
- DE-A1-102005 032 346
- FR-A1- 2 791 689
- FR-A1- 2 870 453

## Beschreibung

### Gebiet der Erfindung

Die vorliegende Erfindung betrifft eine wasserfreie Zusammensetzung, ihre Verwendung als Beschichtungsmittel, Mehrschichtlackierungen enthaltend diese Zusammensetzungen, Verfahren zur Herstellung der Mehrschichtlackierungen sowie ihre Verwendung. Darüber hinaus betrifft die Erfindung Substrate, die mit der Zusammensetzung bzw. mit der Mehrschichtlackierung beschichtet sind.

### Stand der Technik

Im Bereich der Kraftfahrzeugserienlackierung eingesetzte Mehrschichtlackierungen bestehen heute im Allgemeinen aus einer elektrophoretisch aufgebrachten, vor Korrosion und Steinschlag schützenden Grundierung und einer nachfolgend vor Steinschlag schützenden und die Oberfläche glättenden Füllerschicht. Die Füllerschicht wird dabei meist auf die bereits eingebrannte Grundierung aufgebracht und gehärtet. Es ist aber auch möglich, Grundierung und Füllerschicht gemeinsam zu härten. Auf die ausgehärtete Füllerschicht wird anschließend eine Einschichtlackierung oder eine dekorative Zweischichtlackierung aus einer abhängig vom jeweiligen Farbton in einem oder mehreren Spritzgängen applizierten farb- und/oder effektgebenden Basislackschicht und einer darauf Nass-in-Nass applizierten, schützenden Klarlackschicht aufgebracht. Anschließend wird die Einschichtlackierung bzw. werden die Basislackschicht(en) und die Klarlackschicht gemeinsam gehärtet. Der letztgenannte "Nass-in-Nass"-Verfahrensablauf wird auch als "2-Wet", "2-Coats-1-Bake" oder "2C1 B" bezeichnet.

"Nass-in-nass-Lackierung" ist eine Bezeichnung für zwei- oder mehrfache Lackierung ohne Zwischentrocknung (Römpp Lacke und Druckfarben, Georg Thieme Verlag Stuttgart / New York 1998, Seite 406, Stichwort "Nass-in-Nass-Lackierung").

In den letzten Jahren ist der Reduktion von VOC- und CO₂-Emissionen immer bedeutsamer geworden. Hierbei gab es einerseits eine Zunahme des Einsatzes von Lacken mit einem niedrigen Lösungsmittelgehalt, wie bei den Wasserlacken, Pulverlacken und den High-Solid-Lacken. Zunehmend sind jedoch die Automobilhersteller bestrebt, die Schichtdicken des Lackaufbaus sowie die Anzahl der Arbeitsgänge und ggf. auch die Anzahl der Schichten zu reduzieren, ohne dass es dabei zu einer Verschlechterung des anwendungstechnischen Eigenschaftsprofils der Mehrschichtlackierungen, insbesondere zu einer Verschlechterung der technologische Eigenschaften, kommt. So wurden "Nass-in-Nass-in-Nass-Systeme" (auch unter "3-Wet", "3-Coats-1-Bake" und "3C1B" bekannt) entwickelt, wobei erst eine Funktionsschicht, anschließend ein Basislack und letztlich einen Klarlack Nass-in-Nass nacheinander lackiert und gemeinsam ausgehärtet werden. Bei diesem Verfahren wird auf die üblicherweise zwischen kathodischer Tauchlackierung (KTL) und Basislackschicht liegende Füllerschicht verzichtet. Mittels dieser Verfahren kann die separate Füllerlackierlinie und der Füllerofen eingespart werden. Dies führt neben der Reduktion der CO₂-Emissionen, durch Verringerung der eingesetzten Lackmenge, auch zu deutlichen wirtschaftlichen Vorteilen für die Automobilhersteller.

Im 3C1 B-Verfahren übernimmt die Aufgaben der Füllerschicht, wie z.B. Steinschlagschutz, Glättung der Oberfläche, Unterstützung der Deckkraft der Basislackschicht bei Basislacken mit geringer Deckkraft, Vermeidung der Delamination der elektrophoretisch applizierte Grundierung und UV-Schutz der Mehrschichtlackierung, eine Funktionsschicht. Sie wird aus UV-undurchlässigen Beschichtungsmitteln gewonnen. Außerdem dürfen die Eigenschaften einer Mehrschichtlackierung insgesamt nicht verschlechtert werden, d.h. beispielsweise, dass die Korrosionsschutz-Eigenschaften nicht beeinträchtigt werden soll. Ferner soll die Funktionsschicht eine gewisse physikalische Trocknung und entsprechende Löslichkeitsparameter zeigen, um ein Vermischen der Funktions- mit der Basislackschicht zu verhindern, wodurch ein guter Flop von effektgebenden Basislacken gewährleistet wird.

Aus der Patentanmeldung US 2003/0158321 ist ein 3C1 B-Verfahren bekannt. Darin basiert die Funktionsschicht auf Polyester-Melamin-Basis und enthält außerdem blockierte Isocyanate, NAD-Bindemittel-Partikeln (Non Aqueous Dispersion) mit einer Kern-Schale-Struktur und Talkum. Die NAD-Bindemittel-Partikeln bewirken einen starken Viskositätsanstieg nach der Applikation und erhöhen dadurch die Löslichkeitsparameter zwischen der Oberfläche der Funktionsschicht und dem Basislack, womit ein Vermischen der beiden Schichten verhindert wird. Diese Beschichtungsmittel weisen jedoch eine Empfindlichkeit bezüglich Läufer auf und zeigen eine schlechte Appearance bei hohen Schichtdicken. Bei niedrigen Schichtdicken wird dagegen eine schlechte UV-Beständigkeit erzielt. Um eine ausreichende Steinschlaghaftung zu gewährleisten, wird Talkum als Zusatzstoff benötigt. Jedoch kommt es beim Einsatz von Talkum zu einer unzureichenden Haftung nach Feuchtebelastung.

Die europäischen Patentanmeldungen EP-A-1940977 und EP-A-1954771 beschreiben jeweils 3C1 B-Verfahren, bei denen die Funktionsschicht essentiell frei von NAD-Bindemittel-Partikeln und/oder vernetzte Microgel-Bindemittel Partikeln ist.

Um die benötigte physikalische Trocknung zwischen der Funktions- und der Basislackschicht nach Applikation zu gewährleisten, wird im EP 1940977 ein dispergiertes Pfropf-Polymer, bestehend aus einem nicht-vernetzten Acrylharz-Kern, welcher unlöslich in unpolaren organischen Lösungsmittel ist, und einem an dem Kern gepfropftem Acrylat-Stabilisator in Form eines Makromonomers, welches in unpolaren organischen Lösungsmitteln löslich ist, beschrieben. Zusätzlich enthält die Funktionsschicht mindestens ein unpolares Lösungsmittel. Auch in dieser Anmeldung wird zur Verbesserung der Steinschlag-Haftung Talkum in der Funktionsschicht eingesetzt, was sich wiederum negativ auf die Haftung nach Feuchtebelastung auswirkt.

In der Anmeldung EP 1954771 werden sogenannte "hyperbranched-Acrylatharze" verwendet, um die benötigte physikalische Trocknung zwischen dem Füller und dem Basislack nach Applikation zu gewährleisten. Hierbei handelt es sich um ein hochverzweigtes Caprolacton-modifiziertes Acrylat-Polymer, welches partiell noch Hydroxy- und/oder Carboxyl-Monomere enthält, die ein Molekulargewicht zwischen 10000 und 150000 Da aufweisen. Um die gewünschten technologischen und anwendungstechnischen Eigenschaften zu erreichen, müssen Bindemittel-Anteile zwischen 40 bis 95 Gew.-% auf Gesamt-Bindemittel eingesetzt werden. Allerdings führt die Verwendung dieser hohen Anteile an Acrylatharz in der Funktionsschicht nicht in allen Fällen zu einer guten Steinschlag-Haftung. Speziell bei hochpigmentierten Farbtönen wie Weiß und Rot kann es zu schlechten Haftungsergebnissen kommen.

Die Anmeldung WO 2006/062666 beschreibt einen füllerlosen Lackier-Prozess. Die in dieser Schrift beschriebene Basislack-Funktionsschicht weist eine Undurchlässigkeit für UV-Strahlen auf. Die UV-stabilen Bestandteile in der Funktionsschicht setzen sich aus einer Kombination von mindestens zwei Komponenten bestehend aus Titaniumdioxid, Ruß, Eisenoxid- und/oder Aluminium-Pigmenten zusammen. Die resultierende Funktionsschicht ergibt bei einer Schichtdicke von 15µm eine UV-Transmission, bei der weniger als 0,5% des UV-Lichtes durch den Basislack gehen. Die erwähnten Funktionsschichten sind auf Acrylat-Basis und weisen daher einen geringeren Steinschlagschutz in Vergleich zu einer konventionellen Füllerschicht auf.

Die Patentanmeldung EP-A-0893483 beschreibt eine 3C1 B-Funktionsschicht für die Lackierung von lichtempfindlichen OEM-Anbauteilen. Die Funktionsschicht enthält einen sehr hohen Anteil an Ruß. Dies wird durch den Einsatz von Dispergieradditiven, einem organischen Pigment-Synergisten und eines UV-Absorbers ermöglicht. Durch diese Kombination soll bei Schichtdicken von 2,5 bis 5 µm eine ausreichende UV-Beständigkeit gewährleistet sein. Außerdem besteht die Funktionsschicht zusätzlich aus einem Microgel, einem Vernetzer auf Basis eines Melaminharzes, und einem OH-Träger auf Basis von Polyester und/oder Polyether. Nachteilig bei den aus der EP-A- 0893483 bekannten Beschichtungsmitteln ist jedoch, dass die resultierenden Beschichtungen nur als Anthrazit-Primer verwendet werden können, da sonst die notwendige UV-Stabilität nicht gewährleistet ist. Dies hat jedoch, insbesondere bei schlecht deckenden Farbtönen, einen starken Einfluss auf den Farbton der Basislackschichten. Außerdem zeigen die Polyether in der Regel schlechte Haftungsergebnisse nach Feuchtebelastung. (*)

### Aufgabe

Der vorliegenden Erfindung lag daher die Aufgabe zugrunde, eine Zusammensetzung bereitzustellen, die als Beschichtungsmittel fungierend Funktionsschichten in Mehrschichtlackierungen mit mindestens drei Lackierungen ohne Zwischentrocknung (3C1 B-Mehrschichtlackierungen) bildet und die Nachteile des Standes der Technik nicht aufweist. Die Funktionsschicht sollte dabei die Füllerschicht von 3C1 B-Mehrschichtlackierungen des Standes der Technik ersetzten. Die resultierende Mehrschichtlackierung sollte eine hervorragende Zwischenschichthaftung sowie eine hohe Steinschlagfestigkeit, insbesondere bei extremen Schwitzwasser-Bedingungen, aufweisen. Ebenfalls sollte die Mehrschichtlackierung eine hohe Scheibenverklebungshaftung zeigen.

Als Zwischenschichthaftung wird die Haftung zwischen den einzelnen Schichten (beispielsweise KTL zu Funktionsschicht, Funktionsschicht zu Basislack, Basislack zu Klarlack), die durch Belastung wie Steinschlag, Gitterschnitt etc. zu Fehler führen kann, verstanden.

Ferner sollten die Zusammensetzungen in einem Nass-in-Nass-in-Nass-Prozess als Funktionsschicht-Lackierung appliziert werden. Dabei sollten jedoch die durch die bekannten Funktionsschichten und die hieraus hergestellten Mehrschichtlackierungen erzielten Vorteile nicht verloren gehen, sondern zumindest in der gleichen, vorzugsweise einer stärkeren, Ausprägung erhalten bleiben

Die entsprechenden Funktionsschichtlackierungen sollten daher in einem 3C1B-Aufbau insbesondere einen guten Haze, d.h. keinen Glanzschleier, einen guten Verlauf sowie einen sehr guten optischen Gesamteindruck (Appearance) aufweisen. Ferner sollten die Basislackierungen frei von Lackstörungen wie beispielsweise Rissbildungen (Mudcracking) und Läufern sein.

Schließlich sollte ein Verfahren zur Verfügung gestellt werden, um die UV-Absorption und die technologische Eigenschaften von Funktionsschichtlackierungen, insbesondere im 3C1 B-Prozess, zu verbessern.

Darüber hinaus sollte die Funktionsschicht auch in 2C1 B-Verfahren einsetzbar sein.

### Lösung der Aufgabe

Überraschenderweise wurden Zusammensetzungen gefunden, die die Nachteile des Standes der Technik nicht aufweisen. Vielmehr wurden Zusammensetzungen gefunden, die in 3C1B-Mehrschichtlackierungen eine Funktionsschichtlackierung bilden, die eine besonders gute Zwischenschichthaftung, eine hohe Steinschlagfestigkeit und eine hohe Scheibenverklebungshaftung aufweist. Besonders überraschend war es, dass die Zusammensetzungen erfindungsgemäße Mehrschichtlackierungen ergeben, die unter extrem hoher Luftfeuchtigkeit und Temperaturen mit nachträglicher kalter Belastung eine hohe Scheibenverklebungshaftung und insbesondere gleichzeitig auch eine gute Steinschlagfestigkeit aufweisen. Schließlich erfüllen die erfindungsgemäßen Mehrschichtlackierungen die üblicherweise an eine Automobillackierung gestellten technologischen und anwendungstechnischen Anforderungen.

Darüber hinaus ist die Funktionsschicht auch in 2C1 B-Verfahren einsetzbar.

### Die Zusammensetzung enthält

a. mindestens einen gesättigten oder ungesättigten Epoxy-modifizierten Polyester als Bindemittel,
b. mindestens ein Acrylat- oder Polyurethan-Polymer als weiteres Bindemittel,
c. Polymermikroteilchen,
d. mindestens ein Polymer, welches funktionelle Gruppen bestehend aus blockierten Isocyanaten und Aminoplastharzen enthält, als Vernetzungsmittel,
e. mindestens ein Pigment,
f. mindestens ein organisches Lösemittel und
g. mindestens einen Hilfs- oder Zusatzstoff,
wobei der Festkörper der Zusammensetzung mindestens 50 Gew.-% beträgt und die Zusammensetzung wasserfrei ist.

Zusammensetzungen mit einem Festkörperanteil von 50 Gew.-% und mehr werden als High-Solid-Zusammensetzungen bezeichnet. Entsprechende Beschichtungsmittel werden High-Solid-Beschichtungsmittel genannt.

Mit wasserfreien Zusammensetzungen sind Zusammensetzungen gemeint, die frei oder im Wesentlichen frei von Wasser sind. Der Wasseranteil beträgt vorzugsweise weniger als 1 Gew.-%, bezogen auf das Gesamtgewicht der Zusammensetzung. Der Festkörpergehalt der Zusammensetzung und seiner Bestandteile wird nach DIN ISO 3251 mit einer Einwaage von 1,0 g bei einer Prüfdauer von 60 min bei einer Temperatur von 125 °C durchgeführt.

Vorzugsweise enthält die Zusammensetzung 5 bis 20 Gew.-% Epoxy-modifizierten Polyester, bezogen auf das Gesamtgewicht der Zusammensetzung. Die Gewichtsteile aller Bestandteile der Zusammensetzung addieren sich zu 100 Gew.-%.

In einer besonders bevorzugten Ausführung enthält die erfindungsgemäße Zusammensetzung
a. 5 bis 20 Gew.-% mindestens eines gesättigten oder ungesättigten Epoxy-modifizierten Polyesters als Bindemittel,
b. 5 bis 30 Gew.-% mindestens eines Acrylat- oder Polyurethan-Polymers als weiteres Bindemittel,
c. 5 bis 20 Gew.-% Polymermikroteilchen,
d. 5 bis 15 Gew.-% mindestens eines Polymers, welches funktionelle Gruppen bestehend aus blockierten Isocyanaten und Aminoplastharzen enthält, als Vernetzungsmittel,
e. 5 bis 49,5 Gew.-% mindestens eines Pigments,
f. 30 bis 50 Gew.-% mindestens eines organischen Lösemittels und
g. 0,5 bis 40 Gew.-% mindestens eines Hilfs- oder Zusatzstoffs,
jeweils bezogen auf das Gesamtgewicht der Zusammensetzung, enthält.

### Epoxy-modifizierte Polyester-Bindemittel (PE)

Unter Epoxy-modifizierten Polyester-Bindemitteln (PE) werden Polyesterharze verstanden, die mit Glycidylester-haltigen Bausteinen modifiziert sind.

Bevorzugt enthält die Zusammensetzung 7 bis 18 Gew.-%, besonders bevorzugt 9 bis 15 Gew.-%, jeweils bezogen auf das Gesamtgewicht der Zusammensetzung, mindestens eines Epoxy-modifizierte Polyester-Bindemittels (PE).

Das Epoxy-modifizierte Polyester-Bindemittel weist vorzugsweise eine Säurezahl von 2 bis 40 mg KOH/g, bevorzugt 5 bis 20 KOH/g, jeweils bezogen auf den Festkörper, auf. Die Säurezahl wird nach DIN 53402 bestimmt.

Die Hydroxylzahl beträgt vorzugsweise 50 bis 250 mg KOH/g, bevorzugt 80 bis 200 KOH/g, jeweils bezogen auf den Festkörper. Die Hydroxylzahl wird nach DIN 53240 bestimmt.

Das Epoxy-modifzierte Polyester-Bindemittel hat vorzugsweise einen Festkörpergehalt von 40 bis 90 Gew.-%, bevorzugt von 50 bis 80 Gew.-%.

Geeignete Epoxy-modifizierte Polyesterharze (PE) können gesättigt oder ungesättigt, insbesondere gesättigt sein. Unter ungesättigten Polyesterharzen werden solche verstanden, die eine polymerisierbare Kohlenstoff-Kohlenstoff-Doppelbindung enthalten. Unter gesättigten Polyesterharzen werden solche verstanden, die keine polymerisierbare Kohlenstoff Kohlenstoff-Doppelbindung enthalten.

Vorzugsweise weisen die Epoxy-modifizierte Polyester-Bindemittel (PE) ein gewichtmittleres Molekulargewicht von 5000 bis 20000 g/mol auf. Bevorzugt sind Epoxy-modifizierte Polyester-Bindemittel mit einem gewichtsmittleren Molekulargewicht von 7000 bis 18000 g/mol, besonders bevorzugt 9000 bis 16000 g/mol. Die Bestimmung des Molekulargewichts erfolgt mittels GPC-Analyse mit THF (+0,1 Gew.-% Essigsäure, bezogen auf das THF-Gewicht) als Eluent (1 mL/min) auf einer Styrol-Divinylbenzol-Säulenkombination. Die Kalibrierung wird mit Polystyrol-Standards durchgeführt.

Polyesterharze (PE) werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang auch Polyole oder Polycarbonsäuren mit einer höheren Wertigkeit als 2 eingesetzt werden. Die Di- bzw. Polycarbonsäuren und Di- bzw. Polyole können lineare oder verzweigte aliphatische, cycloaliphatische oder aromatische Di- bzw. Polycarbonsäuren oder Di- bzw. Polyole sein.

Zur Herstellung der Polyesterharze geeignete Diole sind beispielsweise Alkylenglykole, wie Ethylenglykol, Propylenglykol, Butylenglykol, Butandiol-1,4, Hexandiol-1,6, Neopentylglykol, und andere Diole, wie Dimethylolcyclohexan. Es können jedoch auch kleine Mengen bis 10 Gew.-%, bezogen auf das Gesamtgewicht an Poly- und Diolen, an Polyolen, wie beispielsweise Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren, verwendet werden.

Es können auch Polyesterdiole als Diole eingesetzt werden, die durch Umsetzung eines Lactons mit einem zweiwertigen Alkohol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 12 und der Substituent R² = jeweils unabhängig voneinander Wasserstoff, ein Alkyl-, Cycloalkyl- oder Alkoxy-Rest. Bevorzugt enthält keiner der Substituenten R² mehr als 12 Kohlenstoffatome. Beispiele sind Hydroxycapronsäure, Hydroxybuttersäure, Hydroxydecansäure und/oder 12-Hydroxystearinsäure.

Für die Herstellung der Polyesterdiole wird das unsubstituierte epsilon-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4- Butandiol, Dimethylolcyclohexan gestartet. Es können jedoch auch andere Reaktionskomponenten wie Alkyldiamine (beispielsweise Ethylendiamin, Triethylendiamin, Trimethylhexamethylendiamin, Hexamethylendiamin), Alkyldialkanolamine oder auch Harnstoff-Verbindungen wie Ethylenharnstoff oder N,N'-Dirnethylharnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Für die Epoxy-Modifizierung der Polyester wird das Glycidylester einer gesättigten Monocarbonsäure bevorzugt. Vorzugsweise wird das Glycidylester einer in alpha-Stellung verzweigten Monocarbonsäure mit 5 bis 18 C-Atomen je Molekül eingesetzt, besonders bevorzugt wird das Glycidylester der Versatic®-Säure der Firma Shell eingesetzt. Dieser Glycidylester ist unter dem Namen "Cardura E10" im Handel erhältlich.

Die in den erfindungsgemäßen Beschichtungsmitteln eingesetzten Epoxy-modifizierten Polyester-Bindemittel (PE) haben vorzugsweise einen Gehalt von 5 bis 15 Gew.- %, bevorzugt 7 bis 13 Gew.-% an Epoxy-Gruppen, jeweils bezogen auf das Gesamtgewicht der Polyester-Bindemittel.

### Weitere Bindemittel (BM)

Die Zusammensetzung enthält mindestens ein Acrylat- oder Polyurethan-Polymer als weiteres Bindemittel (BM). Vorzugsweise ist das weitere Bindemittel mit einem Anteil von 5 bis 30 Gew.-%, bezogen auf das Gesamtgewicht der Zusammensetzung, in der erfindungsgemäßen Zusammensetzung enthalten.

Bevorzugt enthält die Zusammensetzung 10 bis 25 Gew.-%, besonders bevorzugt 12 bis 23 Gew.-%, mindestens eines weiteres Bindemittels (BM), jeweils bezogen auf das Gesamtgewicht der Zusammensetzung.

Geeignete Acrylat-Bindemittel (AC) werden ausführlich in den deutschen Patentanmeldung DE 2006053776 A1, Seite 23 Zeile 10 bis Seite 26 bis Zeile 2 beschrieben.

Geeignete Polyurethan Bindemittel (PUR) werden ausführlich in den deutschen Patentanmeldung DE 2006053776 A1, Seite 26 Zeile 4 bis Seite 28 bis Zeile 30 beschrieben.

### Polymermikroteilchen (M)

Die Zusammensetzungen enthalten Polymermikroteilchen. Vorzugsweise sind 5,0 bis 20,0 Gew.-%, bevorzugt 8,0 bis 15,0 Gew.-%, jeweils bezogen auf das Gesamtgewicht der Zusammensetzung, enthalten.

Polymermikroteilchen in den Zusammensetzungen sind vorteilhaft, da dadurch ein Vermischen der einzelnen Schichten unterbunden werden kann.

Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Stehvermögens, des Abdunstverhaltens und des Anlöseverhaltens durch den Basislack eingesetzt werden.

Geeignete Polymermikroteilchen weisen üblicherweise ein gewichtmittleres Molekulargewicht von 2000 bis 100000 auf. Die Bestimmung des Molekulargewichts erfolgt mittels GPC-Analyse mit THF (+ 0,1 Gew.-% Essigsäure, bezogen auf das THF-Gewicht) als Eluent (1 mL/min) auf einer Styrol-Divinylbenzol-Säulenkombination. Die Kalibrierung wird mit Polystyrol-Standards durchgeführt.

Geeignete Polymermikroteilchen weisen vorzugsweise eine mittlere Teilchengröße von 0,01 bis 10 µm, bevorzugt von 0,01 bis 5 µm und besonders bevorzugt von 0,02 bis 2 µm nach ISO 13320-1 auf.

Besonders bevorzugt eingesetzte Polymermikroteilchen weisen reaktive funktionelle Gruppen auf, die mit den funktionellen Gruppen des Vernetzungsmittels reagieren können. Insbesondere weisen die Polymermikroteilchen dabei Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01 /72909 beschrieben.

Vernetzte Polymermikroteilchen sind beispielsweise dadurch erhältlich, indem ein Gemisch aus:
(a) ethylenisch ungesättigten Monomeren, die eine einzige ethylenisch ungesättigte Gruppe pro Molekül enthalten oder ein Gemisch aus solchen Monomeren und
(b) ethylenisch ungesättigten Monomeren, die mindestens zwei ethylenisch ungesättigte Gruppen pro Molekül enthalten oder ein Gemisch aus solchen Monomeren
in einer wässrigen Phase ggf. in Gegenwart von Emulgatoren oder ggf. in Gegenwart eines Trägerharzes polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionischen und/oder polaren Gruppen, vorzugsweise Hydroxylgruppen und/oder Carboxylgruppen enthaltenden Komponenten hergestellt worden sind. Die Komponenten (a) und (b) sollen in der Regel jeweils zwischen 1 und 20, bevorzugt zwischen 3 und 15 Gew.-% ionische und/oder polare Gruppen, bezogen auf das Gesamtgewicht der Polymermikroteilchen, enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente (b) einzusetzen.

Die in den Zusammensetzungen eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:
(c) einem ethylenisch ungesättigten Monomeren (M1), das mindestens eine reaktive Gruppe (G1) pro Molekül enthält oder ein Gemisch aus solchen Monomeren (M1) und
(d) ggf. einem ethylenisch ungesättigten Monomeren (M2), das mindestens eine, von (G1) verschiedene, reaktive Gruppe (G2) pro Molekül enthält oder ein Gemisch aus solchen Monomeren (M2) und
(e) ggf. einem weiteren ethylenisch ungesättigten Monomeren (M3) oder ein Gemisch aus solchen Monomeren (M3)
einer Polymerisation in einem organischen Lösemittel ggf. in Gegenwart eines Trägerharzes unterworfen wird.

Geeignete Monomere (M1) sind beispielsweise Monomere, die Hydroxylgruppen, Carbamatgruppen, Aminogruppen, Alkoxymethyl-Aminogruppen, Allophanatgruppen oder Iminogruppen, insbesondere Hydroxylgruppen, enthalten.

Die Monomeren (M1) mit den reaktiven Gruppen (G1) können dabei auch durch Reaktion zweier Verbindungen, von denen eine Verbindung (a) eine reaktive Gruppe (a) und mindestens eine ethylenisch ungesättigte Doppelbindung und die andere Verbindung eine ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die mindestens zwei ethylenisch ungesättigte Gruppen pro Molekül enthalten oder ein Gemisch aus solchen Monomeren enthalten.

### Vernetzungsmittel (V)

Die Zusammensetzung enthält vorzugsweise 5 bis 15 Gew.-%, bezogen auf das Gesamtgewicht der Zusammensetzung, mindestens ein Polymer, welches ausgewählt wird aus der Gruppe der blockierten Isocyanate und der Aminoplastharze.

Vorzugsweise enthält die Zusammensetzung 20 bis 25 Gew.-% Aminoplastharze und 0 bis 10 Gew.-% blockierte Isocyanate, jeweils bezogen auf den GesamtbindemittelFestkörper. Bevorzugt sind 21 bis 24 Gew.-% Aminoplastharze. Ebenfalls bevorzugt sind 2 bis 6 Gew.-% blockierte Isocyanate. Besonders bevorzugt enthält die Zusammensetzung 21 bis 24 Gew.-% Aminoplastharze und 2 bis 6 Gew.-% blockierte Isocyanate.

Als blockierte Isocyanate kommen die im Bereich der Lackindustrie üblicherweise eingesetzten blockierten Isocyanate in Betracht, wie beispielsweise Hexamethylendiisocyanat (HDI), Isophorondiisocyanat (IPDI), Toluylendiisocyanat (TDI); deren Di- und Trimere sowie Derivate und blockierte Varianten.

Blockierte Isocyanate können aus Isocyanaten durch Reaktion mit einem Blockierungsmittel erhalten werden. Als Blockierungsmittel für Isocyanate kommen alle üblicherweise eingesetzten Blockierungsmittel, wie die entsprechenden Alkohole, Amine, Ketone, Pyrazole und andere in Frage, bevorzugt Blockierungsmittel mit einer Deblockierungstemperatur unterhalb von 130 °C. Bevorzugt werden mit Dimethylpyrazol blockierte Isocyanate eingesetzt, insbesondere Desmodur® PL 350 SN und Desmodur® VP LS 2253 der Firma Bayer.

Als Aminoplastharze sind prinzipiell die im Bereich der Lackindustrie üblicherweise eingesetzten Aminoplastharze geeignet, wobei über die Reaktivität der Aminoplastharze einige Eigenschaften der Funktionsschicht gesteuert werden können. Je reaktiver das Vernetzungsmittel ist, desto schlechter sind Verlauf der Lackierung und die Lagerstabilität des Beschichtungsmittels. Beispielsweise lassen sich Verlauf und Lagerstabilität über den Veretherungsgrad und den zur Veretherung eingesetzten Alkohol beeinflussen. Geeignete Alkohole sind beispielsweise Methanol und Butanol. Es können monomere Vernetzungsharze wie Hexa(methoxymethyl)melamin (HMMM) oder gemischt-veretherte Melamine, oder auch polymere Vernetzungsharze eingesetzt werden. Bevorzugt werden mit Methanol und/oder Butanol veretherte Aminoplastharze, beispielsweise die im Handel unter den Bezeichnungen Cymel®, Resimene®, Maprenal® und Luwipal® erhältlichen Produkte, insbesondere Resimene® 747 und Resimene® 755 der Firma Ineos Melamines, eingesetzt.

Vorteilhafterweise sind keine unblockierten Isocyanate als Vernetzungsmittel enthalten, da diese zu einem unerwünschten Viskositätsanstieg führen.

### Pigmente (P)

Die Zusammensetzung enthält vorzugsweise 5 bis 49,5 Gew.-%, bezogen auf das Gesamtgewicht der Zusammensetzung, mindestens eines Pigments (P). Bevorzugt sind Zusammensetzungen, die 8 bis 40 Gew.-% Pigmente enthalten.

Pigmente sind pulver- oder plättchenförmige Farbmittel, die im Gegensatz zu Farbstoffen im umgebenden Medium unlöslich sind (vgl. Römpp Lacke und Druckfarben, Seite 451, Stichwort "pigmente").

Vorzugsweise wird das Pigment aus der Gruppe bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten ausgewählt. Vorzugsweise werden die farb- und/oder effektgebenden Pigmente verwendet.

Besonders bevorzugt enthält die Zusammensetzung mindestens ein effektgebendes Pigment, insbesondere mindestens ein Metallplättchenpigment. Zusammen mit dem oder den effektgebenden Pigmenten enthält die Zusammensetzung ggf. noch mindestens ein oder mehrere farbgebende Pigmente.

Beispiele geeigneter Effektpigmente, die auch farbgebend sein können, sind Metallplättchenpigmente, wie handelsübliche Aluminiumbronzen und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden handelsübliche Aluminiumbronzen eingesetzt. Eingesetzt werden dabei sowohl unbehandelte Typen, die beispielsweise unter dem Namen Stapa® Metallux der Firma Eckart im Handel erhältlich sind, als auch behandelte Typen, insbesondere silanisierte Typen, die beispielsweise in der WO 01/81483 beschrieben und unter dem Namen Hydrolan® der Firma Eckart im Handel erhältlich sind.

Vorzugsweise weist das Metallplättchenpigment eine Dicke von 200 bis 2000 nm und insbesondere 500 bis 1500 nm auf. Für die Bestimmung wird ein Lichtmikroskop Typ Leica DM-RX, Vergrößerung 500-1000-fach, eingesetzt.

Bevorzugt hat das Metallplättchenpigment eine mittlere Teilchengröße von 10 bis 50 und insbesondere von 13 bis 25 µm (ISO 13320-1 nach Cilas (Gerät 1064)).

Geeignete organische und/oder anorganische farbgebende Pigmente sind die in der Lackindustrie üblicherweise eingesetzten Pigmente.

Beispiele für geeignete anorganische farbgebende Pigmente sind Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Bevorzugt enthält die Zusammensetzung 0,01 bis 50,0 Gew.-% anorganische farbgebende Pigmente, bezogen auf das Gesamtgewicht der Zusammensetzung. Werden Schwarzpigmente eingesetzt, so beträgt ihr Anteil in der erfindungsgemäßen Zusammensetzung vorzugsweise 0,6 bis 30,0 Gew.-%, bezogen auf das Gesamtgewicht der Zusammensetzung.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz", Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe die eingestellt werden sollen, sowie nach der Dispergierbarkeit der Pigmente in der Funktionsschicht und die UV Durchlässigkeit.

### Organische Lösemittel (L)

Die Zusammensetzung enthält vorzugsweise 30 bis 50 Gew.-%, bezogen auf das Gesamtgewicht der Zusammensetzung, mindestens eines organischen Lösemittels (L).

Bevorzugt enthält der Zusammensetzung 35 bis 45 Gew.-%, besonders bevorzugt 38 bis 45 Gew.-%, jeweils bezogen auf das Gesamtgewicht der Zusammensetzung, mindestens eines organischen Lösemittels (L).

Als organische Lösemittel (L) geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, aliphatische Kohlenwasserstoffe wie Shellsol T (aliphatische Kohlenwasserstoffe der Fa. Shell), Pine Oel 90/95 (aromatische Kohlenwasserstoffe), Solventnaphtha® (aromatische Kohlenwasserstoffe der Fa. Exxon Mobile), Shellsol® A (aromatische Kohlenwasserstoffe der Fa. Shell), Solvesso (aromatische Kohlenwasserstoffe der Firma ExxonMobil), Benzin 135/180 (aromatische Kohlenwasserstoffe der Firma BP) und ähnliche.

Durch den Gehalt an organischem Lösemittel (L) kann die Viskosität der Zusammensetzung beeinflusst werden und wird vorzugsweise auf die Spritzviskosität eingestellt. Die Spritzviskosität ist die Viskosität, auf die ein Beschichtungsstoff vor der Spritzapplikation durch Lösemittel-Zugabe eingestellt wird (Römpp Lacke und Druckfarben, Seite 537, Stichwort "Spritzviskosität"). Der Gehalt an organischem Lösemittel (L) wird bevorzugt so gewählt, dass die Funktionsschicht bei 23 °C eine Viskosität von 24 s bis 30 s, bevorzugt 26 bis 28 s, Auslaufzeit im Ford 4 Cup aufweist.

Der Gehalt an organischem Lösemittel (L) in der Zusammensetzung wird stets so gewählt, dass die Zusammensetzung einen Festkörpergehalt von mindestens 50 Gew.-% aufweist. Vorzugsweise beträgt der Festkörpergehalt der erfindungsgemäßen Zusammensetzung mindestens 51 Gew.-%, bevorzugt 52 Gew.-%. Der Festkörpergehalt der Funktionsschicht wird in Anlehnung an DIN ISO 3251 mit einer Einwaage von 1,0 g bei einer Prüfdauer von 60 min bei einer Temperatur von 125 °C durchgeführt.

### Hilfs- und Zusatzstoffe (Z)

Die Zusammensetzung enthält vorzugsweise 0,5 bis 40 Gew.-%, bezogen auf das Gesamtgewicht der Zusammensetzung, mindestens eines Hilfs- oder Zusatzstoffs (Z).

Bevorzugt enthält die erfindungsgemäße Zusammensetzung 1 bis 35 Gew.-%, besonders bevorzugt 1,5 bis 30 Gew.-%, jeweils bezogen auf das Gesamtgewicht der Zusammensetzung, mindestens eines Hilfs- oder Zusatzstoffs (Z).

Geeignete Hilfs- oder Zusatzstoffe (Z) sind die üblicherweise in der Lackindustrie eingesetzten, bekannten Hilfs- und Zusatzstoffe. Beispiele für geeignete Hilfs- und Zusatzstoffe sind organische und anorganische Füllstoffe, z.B. Talkum und/oder Farbstoffe (organische, im umgebenden Medium lösliche schwarze oder bunte Substanzen (vgl. Römpp Lacke und Druckfarben, Seite 221, Stichwort "Farbmittel")) sowie weitere übliche Hilfs- und Zusatzstoffe, wie z.B. Antioxidantien, Entlüftungsmittel, Netzmittel, Dispergiermittel, Emulgatoren, Rheologiehilfsmittel wie Verlaufsmittel, Verdickungsmittel, Antiablaufmittel und Thixotropiermittel, Wachse und wachsartige Verbindungen, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber, Netzmittel sowie Rheologiehilfsmittel.

Vorzugsweise ist kein Talkum enthalten. Zusammensetzungen enthaltend Talkum zeigen eine Verschlechterung der Haftung nach Feuchtigkeitsbelastung.

### Weitere Gegenstände

Ein weiterer Gegenstand ist ein Verfahren zur Herstellung der erfindungsgemäßen Zusammensetzung. Dabei kann die Zusammensetzung durch Vermischen und Homogenisieren der Bestandteile hergestellt werden.

Ein weiterer Gegenstand ist die Verwendung der Zusammensetzung als Beschichtungsmittel. Das Beschichtungsmittel wird vorzugsweise zur Herstellung einer Funktionsschicht in Mehrschichtlackierungen eingesetzt, wobei die Mehrschichtlackierungen
a. mindestens eine Funktionsschicht A, erhalten aus der erfindungsgemäßen Zusammensetzung,
b. mindestens eine Basislackierung B mindestens eines Basislacks und
c. mindestens eine Klarlackierung C mindestens eines Klarlacks,
   umfassen.

Vorzugsweise werden nacheinander zunächst A, dann B und schließlich C auf ein Substrat aufgebracht und A, B und C anschließend gemeinsam gehärtet (3C1 B-Verfahren) oder es wird zunächst A auf ein Substrat aufgebracht und gehärtet, danach werden B und schließlich C auf das Substrat aufgebracht und B und C anschließend gemeinsam gehärtet (2C1 B-Verfahren). Bevorzugt ist die Verwendung zur Herstellung einer Funktionsschicht in Mehrschichtlackierungen, die nach dem 3C1 B-Verfahren erhalten werden.

Ein Gegenstand der Erfindung ist eine Mehrschichtlackierung, bestehend aus
a. mindestens einer Funktionsschicht A, erhalten aus der erfindungsgemäßen Zusammensetzung,
b. mindestens einer Basislackierung B mindestens eines Basislacks und
c. mindestens einer Klarlackierung C mindestens eines Klarlacks.

Vorzugsweise ist die erfindungsgemäße Mehrschichtlackierung nach dem 2C1B- oder 3C1B-Verfahren erhältlich. Bevorzugt ist die erfindungsgemäße Mehrschichtlackierung nach dem 3C1 B-Verfahren erhältlich.

Die erfindungsgemäßen Mehrschichtlackierungen bestehen vorzugsweise aus genau einer Funktionsschicht, genau einer Basislackierung und genau einer Klarlackierung. Besonders bevorzugt werden dazu genau eine erfindungsgemäße Zusammensetzung für die Funktionsschicht, genau ein Basislack für die Basislackierung und genau ein Klarlack für die Klarlackierung eingesetzt.

Die erfindungsgemäßen Mehrschichtlackierungen können auf beliebige Substrate aufgebracht werden. Die Substrate können aus den unterschiedlichsten Materialien und Kombinationen von Materialien aufgebaut sein. Vorzugsweise bestehen sie aus Metallen, Kunststoffen und/oder Glas, besonders bevorzugt aus Metall und/oder Kunststoff.

Die Substrate sind üblicherweise mit einer Grundierung und gegebenenfalls mit einem Flash-Primer versehen, die mit den üblichen Verfahren, wie Elektrotauchlackierung, Tauchen, Rakeln, Spritzen, Walzen appliziert werden. Bevorzugt wird die Grundierung zumindest teilweise oder vollständig ausgehärtet, ehe die erfindungsgemäße Zusammensetzung appliziert wird. Die Aushärtung der Grundierung bzw. des Füllers erfolgt üblicherweise durch Erhitzen auf eine Temperatur zwischen 80 und 170 °C für eine Zeit von 3 bis 30 min.

Als Basislacke sind alle üblicherweise eingesetzten lösemittelhaltigen pigmentierten Beschichtungsmittel wie beispielsweise Medium Solid- (Festkörperanteil von 15 bis 30 Gew.-%) oder High Solid-Basislacke (Festkörperanteil mindestens 40 Gew.-%) geeignet. Die eingesetzten Basislacke können thermisch und/oder mittels Strahlung, insbesondere mittels UV-Strahlung, härtbar sein.

Die Basislacke enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere (Carboxyl/Epoxy), (Amin oder Thiol oder Hydroxyl/blockiertes oder freies Isocyanat oder alkoxylierte Aminogruppen oder umesterungsfähige Gruppen), ((Meth)Acryloy/CH-acide oder Amin oder Hydroxyl oder Thiol), (Carbamat/alkoxylierte Aminogruppen) und ((Meth)Acryloyl/(Meth)Acryloyl).

Eingesetzt werden insbesondere Basislacke auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten, Aminoplastharzen, Anhydriden.

Neben dem Bindemittel und dem Vernetzer enthalten die Basislacke übliche Hilfs- und Zusatzstoffe, wie beispielsweise Katalysatoren für die Vernetzung, Entschäumer, Haftvermittler, Additive zur Verbesserung der Untergrundbenetzung, Rheologiemittel, Wachse, Verlaufsmittel, Lichtschutzmittel, vorzugsweise die oben beschriebenen UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden. Geeignete Pigmentierte Beschichtungsmittel sind beispielsweise in den deutschen Patentanmeldung DE-A-2006053776 beschrieben.

Die Basislacke können Polymermikroteilchen enthalten. Somit kann ein besseres Flop-Verhalten erreicht werden.

Als Klarlacke der erfindungsgemäßen Mehrschichtlackierung sind alle üblicherweise eingesetzten transparenten Beschichtungsmittel geeignet, wie beispielsweise üblicherweise eingesetzte wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulversluny-Klarlacke. Bevorzugt weisen die transparenten Beschichtungsmittel (Klarlacke) einen Festkörperanteil von mindestens 40 Gew.-% auf. Die eingesetzten transparenten Beschichtungsmittel können thermisch und/oder mittels Strahlung, insbesondere mittels UV-Strahlung, härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere die folgenden zueinander jeweils komplementären Paare: (Carboxyl/Epoxy), (Amin oder Thiol oder Hydroxyl/blockiertes oder freies Isocyanat oder alkoxylierte Aminogruppen oder umesterungsfähige Gruppen), ((Meth)Acryloy/CH-acide oder Amin oder Hydroxyl oder Thiol), (Carbamat/alkoxylierte Aminogruppen) und ((Meth)Acryloyl/(Meth)Acryloyl).

Eingesetzt werden insbesondere transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten, Aminoplastharzen, Anhydriden.

Neben dem Bindemittel und dem Vernetzer enthalten die transparenten Beschichtungsmittel übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden.

Geeignete transparente Beschichtungsmittel sind beispielsweise in der WO 03/050194 A1, in der US 2008/076868 A1 und in der WO 06/063304 A1 beschrieben.

Die Funktionsschicht A der erfindungsgemäßen Mehrschichtlackierung weist vorzugsweise eine Trockenfilmschichtdicke von 5 bis 40 µm, bevorzugt von 10 bis 30 µm, besonders bevorzugt von 15 bis 25 µm und ganz besonders bevorzugt 18 bis 25 µm auf.

Die Trockenfilmschichtdicke der Basislackierung B beträgt vorzugsweise 5 bis 40 µm, bevorzugt 10 bis 30 µm, besonders bevorzugt von 15 bis 25 µm und ganz besonders bevorzugt 18 bis 25 µm.

Die Klarlackierung C weist vorzugsweise eine Trockenfilmschichtdicke von 10 bis 120 µm, bevorzugt von 30 bis 80 µm und insbesondere von 40 bis 70 µm auf.

Ein weiterer Gegenstand der vorliegenden Erfindung ist ein Verfahren zur Herstellung der erfindungsgemäßen Mehrschichtlackierung. Dabei wird die erfindungsgemäße Zusammensetzung auf ein Substrat aufgetragen. Das Substrat ist vorzugsweise grundiert. Anschließend mindestens ein Basislack und anschließend mindestens ein Klarlack aufgetragen. Vorzugsweise wird die Zusammensetzung sowie die Basis- und Klarlacke gemeinsam gehärtet (3C1 B-Verfahren) oder die Zusammensetzung wird zunächst appliziert und gehärtet und anschließend werden Basis- und Klarlack aufgetragen und gemeinsam gehärtet (2C1 B-Verfahren). Bevorzugt wird die Zusammensetzung sowie die Basis- und Klarlacke gemeinsam gehärtet.

Der Basislack und der Klarlack werden ebenso wie die Zusammensetzung mittels üblicher Verfahren zur Applikation von flüssigen Beschichtungsmitteln, wie beispielsweise Tauchen, Rakeln, Spritzen, Walzen, insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Besonders vorteilhaft ist es, den Basislack in einem ersten Auftrag durch ESTA und einem zweiten Auftrag pneumatisch zu applizieren.

Im 3C1 B-Verfahren wird die Zusammensetzung nach Applikation abgelüftet oder getrocknet, vorzugsweise bei einer Temperatur zwischen 30 und kleiner 100 °C für eine Zeit von 1 bis 15 min. Danach wird der Basislack appliziert und auch kurz abgelüftet oder kurz getrocknet, vorzugsweise bei einer Temperatur zwischen 30 und kleiner 100 °C für eine Zeit von 1 bis 15 min. Anschließend wird das transparente Beschichtungsmittel appliziert.

Die applizierte Zusammensetzung (nasse Funktionsschicht), der applizierte Basislack (nasse Basislackierung) und der applizierte Klarlack (nasse Klarlackierung) werden vorzugsweise zumindest thermisch gehärtet. Sofern der Klarlack auch noch mit aktinischer Strahlung härtbar ist, erfolgt noch eine Nachhärtung durch Bestrahlung mit aktinischer Strahlung. Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte (< 10 g Wasser/kg Luft) unterstützt und/oder verkürzt werden, sofern hierbei keine Schädigungen oder Veränderungen der Lackschichten eintreten, etwa eine vorzeitige vollständige Vernetzung.

Die Aushärtung erfolgt üblicherweise bei einer Temperatur zwischen 90 und 160 °C während einer Zeit von 15 bis 90 min.

Für die Trocknung bzw. Konditionierung der nassen Funktionsschicht, der nassen Basislackierung sowie der nassen Klarlackierung werden bevorzugt thermische und/oder Konvektionsverfahren verwendet, wobei übliche und bekannte Vorrichtungen wie Durchlauföfen, NIR- und IR- Heizstrahler, Gebläse und Blastunnel eingesetzt werden. Diese Vorrichtungen können auch miteinander kombiniert werden.

Im 2C1 B-Verfahren wird analog vorgegangen, mit dem Unterschied, dass die Zusammensetzung zunächst appliziert, getrocknet und gehärtet wird. Anschließend erfolgt werden Basis- und Klarlack nach den zuvor genannten Methoden aufgetragen, getrocknet und gehärtet.

Ein weiterer Gegenstand der Erfindung ist die Verwendung der erfindungsgemäßen Mehrschichtlackierungen zur Beschichtung von Substraten. Vorzugsweise handelt es sich um die oben angegebenen Substrate.

Die erfindungsgemäßen Mehrschichtlackierungen werden insbesondere im Bereich der Automobilserienlackierung, aber auch im Bereich der Nutzfahrzeug- und der Autoreparatur-Lackierung eingesetzt, und zwar für die Beschichtung von Kraftfahrzeugkarossen oder von Karosserie-Innenbauteilen oder Karosserie-Außenbauteilen. Sie sind aber auch für andere Bereiche geeignet, wie beispielsweise für die Beschichtung von Bauteilen für den Schiff- und Flugzeugbau oder von Bauteilen für Haushalts- und Elektrogeräte oder deren Teilen.

Ein weiterer Gegenstand der Erfindung sind Substrate, die mit der erfindungsgemäßen Zusammensetzung beschichtet sind. Vorzugsweise bildet die erfindungsgemäße Zusammensetzung die Funktionsschicht einer Mehrschichtlackierung.

Ein weiterer Gegenstand der Erfindung sind Substrate, die mit der erfindungsgemäßen Mehrschichtlackierung beschichtet sind

Im Folgenden wird die Erfindung unter Bezugnahme auf Beispiele weiter erläutert.

### Beispiele

Im Folgenden sind Prozentangaben als Gewichtsprozente zu interpretieren.

### 1. Herstellung eines Epoxy-modifizierten Polyester-Bindemittels (E-PE)

In einem 2L-Vierhalskolben mit Rührer, elektrischer Widerstandsheizung, Thermometer, Füllkörperkolonne gefüllt mit Pall-Ringen, ausgestattet mit Kopfthermometer, Destillationsbrück Kondensatkühler und Vorlage werden eingewogen 81,0 Gew.-Teile 1,6-Hexandiol, 108,0 Gew.-Teile Neopentylglykol, 28,0 Gew.-Teile Glycerin, 38,0 Gew.-Teile Trimethylolpropan, 99,0 Gew.-Teile Adipinsäure, 157,0 Gew.-Teile Phthalsäureanhydrid und 125,0 Gew.-Teile Isophthalsäure. Das Reaktionsgemisch wird unter Rühren schnell auf 160 °C erhitzt und 30min auf 160 °C gehalten. Von 160 °C wird die Temperatur innerhalb 1,5 Stunden auf 190 °C so gesteigert, dass die Kolonnen-Kopftemperatur 103 °C nicht übersteigt. Dann wird auf 150 °C abgekühlt und es werden 63,0 Gew.-Teile Cardura E 10 P und 7,0 Gew.-Teile Xylol zugegeben und anschließend wird erhitzt und eine Stunde bei 165 °C gehalten. Dann wird auf 230 °C erhitzt und auf 230 °C gehalten, bis die Säurezahl einen Wert von 10 mg KOH/g unterschreitet. Der Epoxy-modifizierte Polyester wird weiter abgekühlt und mit einer Mischung von 238,0 Gew.-Teile Solventnaphtha 155/185, 24,0 Gew.-Teile 1-Methoxipropylacetat und 35,0 Gew.-Teile Ethylethoxypropionat angelöst. Es resultiert eine 65%ige Bindemittellösung.

Das so erhaltene Epoxy-modifizierte Polyester (E-PE) weist eine Säurezahl von 8 mg KOH/g nach DIN 53402 und eine OH-Zahl von 102 mg KOH/g nach DIN 53240, jeweils bezogen auf den Festkörper, auf. Der Festkörper des Polyesters beträgt 65 Gew.-%. Das gewichtsmittlere Molekulargewicht beträgt 14500 g/mol. Der Anteil an Epoxy-Gruppen im Polyester beträgt 10 Gew.-%, bezogen auf das Gesamtgewicht des Polyesters.

### 2. Herstellung eines Polyesters ohne Epoxy-Modifizierung (PE)

In einem Reaktor wird eine Mischung aus 29,1 Gew.-Teilen Dimerfettsäure, 28,5 Gew.-Teilen 1,6-Hexandiol, 8,4 Gew.-Teilen iso-Phthalsäure und 1,2 Gew.-Teilen Toluol unter einer Stickstoff-Atmosphäre langsam auf 154 °C erhitzt. Diese Mischung wird anschließend innerhalb von 40 min auf 193 °C erhitzt. Der Reaktionsverlauf wird dabei mittels eines Wasserabscheiders verfolgt. Nach Erreichen einer Säurezahl von 10 mg KOH/g wird das Reaktionsgemisch auf 149 °C abgekühlt. Anschließend werden 11,2 Gew.-Teile Trimellitsäure-Anhydrid unter Verwendung eines Tropftrichters langsam zugegeben.

Nach vollständiger Zugabe des Trimellitsäure-Anhydrids wird auf 166 °C erhitzt. Der Reaktionsverlauf wird dabei durch Bestimmung der Säurezahl verfolgt. Nach Erreichen einer Säurezahl von 32 mg KOH/g wird der Reaktor auf 107 °C abgekühlt und eine Mischung von 10,9 Gew.-Teilen n-Butanol, 9,6 Gew.-Teilen n-Propoxypropanol und 0,01 Gew.-Teilen Dimethanolamin unter Verwendung eines Tropftrichters langsam zugegeben. Nach Abkühlung auf 49 °C wird der Festkörper durch Zugabe von 1,2 Gew.-Teilen n-Butanol auf 73,0% eingestellt.

Das so erhaltene Polyesterharz ohne Epoxy-Modifizierung (PE) weist eine Säurezahl von 31 mg KOH/g und eine OH-Zahl von 422 mg KOH/g, jeweils bezogen auf den Festkörper, auf. Das gewichtsmittlere Molekulargewicht beträgt 4511 g/mol.

### 3. Herstellung einer Aerosil-Paste

In einer Laborrührwerksmühle (Getzmann Labormühle SL 25; Mahlkörper: SAZ 0,6 - 0,8 mm; Energieeintrag: 100 Wh/kg) werden 100,0 g Mahlgut, bestehend aus 40,0 Gew.-Teilen des unter die deutschen Patentanmeldung DE 2006053776 A1 Herstellbeispiel 1.1 , Seite 17 Abschnitt 156, beschriebenen Acrylatbindemittels; 42,0 Gew.-Teile Solvesso 100, 8,0 Gew.-Teile Butanol, 10,0 Gew.-Teilen Aerosil R972 (handelsübliche Kieselsäure der Firma Degussa) zusammen mit 200,0 Gew.-Teilen Quarzsand (Korngrösse 0.7-1 mm) eingewogen und unter Wasserkühlung während 30 min angerieben. Anschließend wird von dem Quarzsand abgetrennt.

### 4. Herstellung einer Bariumsulfat-Paste

In einer Laborrührwerksmühle (s. o.) werden 100 g Mahlgut, bestehend aus 19,5 Gew.-Teilen des unter die deutschen Patentanmeldung DE 2006053776 A1 Herstellbeispiel 1.1 , Seite 17 Abschnitt 156, beschriebenen Acrylatbindemittels, 10,7 Gew.-Teile Solventnaphtha 160/180 (Fa. Exxon Mobile), 0,6 Gew.-Teilen Bentone 34 (handelsübliches Rheologieadditiv der Firma Elementis Specialeties), 0,2 Gew.-Teile Ethanol, 65,0 Gew.-Teilen Blanc Fixe Micro (handelsübliches Bariumsulfat der Firma Sachtleben) und 4,0 Gew.-Teile Butylacetat zusammen mit 200,0 Gew.-Teilen Quarzsand (Korngrösse 0.7-1 mm) eingewogen und unter Wasserkühlung während 30 min angerieben. Anschließend wird von dem Quarzsand abgetrennt.

### 5. Herstellung einer Weiß-Paste

In einer Laborrührwerksmühle (s. o.) wurden 800,0 g Mahlgut, bestehend aus 152,0 Gew.-Teilen des unter die deutschen Patentanmeldung DE 2006053776 A1 Herstellbeispiel 1.1 , Seite 17 Abschnitt 156, beschriebenen Acrylatbindemittels, 33,6 Gew.-Teile Pentylpropionate, 6,4 Gew.-Teilen Bentone 34 und 528,0 Gew.-Teilen TiPure® R902 (handelsübliche Titandioxid der Firma DuPont de Nemours and Company), zusammen mit 1100,0 Gew.-Teilen Quarzsand (Korngrösse 0.7-1 mm) eingewogen und unter Wasserkühlung während 30 min angerieben. Anschließend wurde von dem Quarzsand abgetrennt.

### 6. Herstellung einer Schwarz-Paste

In einer Laborrührwerksmühle (s. o.) wurden 800,0 g Mahlgut, bestehend aus 81,6 Gew.-Teilen des unter die deutschen Patentanmeldung DE 2006053776 A1 Herstellbeispiel 1.1, Seite 17 Abschnitt 156, beschriebenen Acrylatbindemittels, 44,8 Gew.-Teile Pentylpropionat, 401,6 Gew.-Teile Solvesso 100, 136,8 Gew.-Teile eines handelsüblichen Dispergieradditivs, 15,2 Gew.-Teile eines handelsüblichen Pigmentsynergisten und 120,0 Gew.-Teilen Monarch® 900 (handelsüblicher Ruß der Firma Cabot Corp.), zusammen mit 1100,0 Gew.-Teilen Quarzsand (Korngrösse 0.7-1 mm) eingewogen und unter Wasserkühlung während 30 min angerieben. Anschließend wurde von dem Quarzsand abgetrennt.

### 7. Herstellung einer Schlämme eines Aluminiumeffektpigmentes (A)

Die Schlämme wird aus 40,0 Gew.-Teilen einer handelsüblichen non-leafing Aluminiumeffektpigmentpaste vom Cornflake-Typ mit einer mittleren Teilchengröße von 11 µm (Alpate 88037 der Firma Toyal) und 60,0 Gew.-Teilen Butylacetat unter Rühren hergestellt.

### 8. Herstellung der erfindungsgemässen und Vergleichs-Funktionsschichten F-1 bis F-4

Die Funktionsschichten F-1 bis F-4 werden durch Vermischen und Homogenisieren der folgenden Bestandteile (in Gew.-%) hergestellt:

**Tabelle 1.: Herstellung der erfindungsgemäße und Vergleichs-Funktionsschichten F-1 bis F-4.**

| | **Vergleichsbeispiel** | | **Erfindungsgemäße Beispiel** | |
|---|---|---|---|---|
| **Bezeichnung** | **F-1** | **F-2** | **F-3** | **F-4** |
| Microgel¹ | 8,5 | 8,5 | 8,5 | 8,5 |
| N-Ethyl-2-pyrrolidon | 0,8 | 0,8 | 0,8 | 0,8 |
| Amino-Methyl-Propanol-95 (Fa. Anqus Chemie) | 0,08 | 0,08 | 0,08 | 0,08 |
| Melamin Harz² | 2,4 | 2,4 | 2,4 | 2 |
| Melamin Harz³ | 5,7 | 5,7 | 5,7 | 5 |
| UV Absorber⁴ | 1,1 | 1,1 | 1,1 | 1,1 |
| Hals⁵ | 0,5 | 0,5 | 0,5 | 0,5 |
| Benetzungsadditiv⁶ | 0,07 | 0,07 | 0,07 | 0,07 |
| Aerosil-Paste aus Herstellbeispiel 3 | 22,0 | 22,0 | 22,0 | 22,0 |
| Bariumsulfat-Paste aus Herstellbeispiel 4 | 5,8 | 5,8 | 5,8 | 5,8 |
| Weiss-Paste aus Herstellbeispiel 5 | 27,8 | 27,8 | 27,8 | 27,8 |
| Schwarz-Paste aus Herstellbeispiel 6 | 0,35 | 0,35 | 0,35 | 0,35 |
| Acrylatbindemittel⁷ | 18,6 | 9,6 | 9,6 | 7 |
| Polyester aus Herstellbeispiel 2 | | 9,6 | | |
| Epoxy-PE aus Herstellbeispiel 1 | | | 10,4 | 10,4 |
| mit 3,5-Dimethylpyrazol (DMP) blockiertes Isocyanat⁸ | | | | 4 |
| Katalysator⁹ | 2,5 | 2,5 | 2,5 | 2,5 |
| Ethanol | 0,7 | 0,7 | 0,7 | 0,7 |
| Alu-Schlämme aus Herstellbeispiel 7 | 0,5 | 0,5 | 0,5 | 0,5 |
| Butylacetat | 2,6 | 2,0 | 1,2 | 0,9 |

| | | | | |
|---|---|---|---|---|
| Erklärung zur Tabelle 1: ¹ Microgel aus den deutschen Patentanmeldung DE 2006053776 A1 Herstellbeispiel 1.2/1.3, Seite 17 Abschnitt 157/158 ² Resimene 755 der Firma Ineos Melamines ³ Resimene 747 der Firma Ineos Melamines ⁴ Tinuvin 384-2, 95% Methoxy-2-propylacetet (MPA) der Firma BASF SE ⁵ Tinuvin 123 der Firma BASF SE ⁶ Lindron 22 der Firma Lindau Chemicals ⁷ Acrylatbindemittel aus den deutschen Patentanmeldung DE 2006053776 A1 Herstellbeispiel 1.1 , Seite 17 Abschnitt 156 ⁸ Desmodur PL 350, 75% 1-Methoxy-2-propylacetat (MPA) / Solvent Naphtha (SN) 160/180 der Firma Bayer AG ⁹ Nacure® 5225, Dodecylbenzylsulfonsäure (DDBSA), der Firma King Industries, Inc. | | | | |

F-1 und F-2 sind die Vergleichs-Funktionsschichten mit Acrylat oder einer Mischung von Acrylat-Bindemittel und Polyester. F-3 und F-4 sind die erfindungsgemäßen Funktionsschichten mit Epoxy-modifiziertem Polyester, wobei F-4 als zusätzliche Vernetzer blockierte Isocyanate enthält.

Die Funktionsschichten F-1 bis F-4 wurden mit Butylacetat auf eine Spritzviskosität von 27 sec Ford Cup 4-Auslaufbecher (FC4) eingestellt.

**Tabelle 2.: Nassdaten der erfindungsgemäße und Vergleichs-Funktionsschichten F-1 bis F-4.**

| | **Vergleichsbeispiel** | | **Erfindungsgemäße Beispiel** | |
|---|---|---|---|---|
| **Nassdaten** | **F-1** | **F-2** | **F-3** | **F-4** |
| Viskosität (ohne Butlyacetat, FC4) | 38s | 36s | 35s | 37s |
| % BuAc auf Spritzviskosität | 5% | 4% | 4% | 5% |
| Viskosität (nach Butlyacetat-Zugabe, FC4) | 27s | 27s | 27s | 27s |
| Festkörper in Gew.-% (nach BuAc-Zugabe) | 53,2 | 53,5 | 53,4 | 53,1 |

### 9. Herstellung der 3 Wet Lackierungen 3W-1 bis 3W-4

Für die Prüfung der technologischen Eigenschaften wurden die Funktionsschichten F-1 bis F-4 mit einer Trockenfilmschichtdicke von 23µm auf Prüftafeln appliziert, bestehend aus einem Stahlsubstrat (Karosserieblech), das mit einer üblichen und bekannten kathodisch abgeschiedenen und eingebrannten Elektrotauchlackierung beschichtet war (Cathoguard® 500 der BASF Coatings, Trockenfilmschichtdicke 20µm), nach 5 min Ablüften bei Raumtemperatur wurde mit einem handelsüblichen silberne High-Solid-Basislack (ColorClassic HS der Firma BASF Coatings, Trockenfilmschichtdicke 18µm) überschichtet. Anschließend wurden die ersten beiden Schichten während 5 Minuten abgelüftet und mit einem handelsüblichen High Solid 1 K-Klarlack (UreGloss der Firma BASF Coatings, Trockenfilmschichtdicke 45µm) überschichtet. Danach wurden die erhaltene 3C1B-Mehrschichtlackierungen 3W-1 bis 3W-4 20min bei 140 °C Objekttemperatur eingebrannt.

Von den so erhaltenen 3C1 B-Mehrschichtlackierungen 3W-1 bis 3W-4 wurde die Zwischenschichthaftung mittels Gitterschnitttest nach Ford Testmethode BI 106-01 geprüft. Die Bewertungsskala für die Gitterschnittprüfung nach Ford Testmethode BI 106-01 umfasst einen Bereich von 0-10, wobei eine Bewertung > 2 auf ein potentielles Haftungsproblem hinweist.

Die Steinschlagfestigkeit der Mehrschichtlackierungen wurde gemäß Ford Testmethode BI 157-06 geprüft. Die Bewertungsskala für die Steinschlagprüfung nach Ford Testmethode BI 157-06 umfasst einen Bereich von 1-10, wobei eine Bewertung < 4 auf eine mangelhafte Steinschlagfestigkeit hinweist.

Sowohl der Steinschlag als auch der Gitterschnitttest wurde vor als auch nach 240h Schwitzwasser-Konstant-Klima-Test (SKK) ausgeführt.

Für die Prüfung der Scheibenverklebungshaftung vor und nach Cataplasma-Test gemäß Ford-Spezifikation WSK-M11-P57-A1 wurde auf die mit den 3C1B-Mehrschichtlackierungen 3W-1 bis 3W-4 beschichteten Prüftafeln nach 24 h Lagerung bei Raumtemperatur die Scheibenverklebungsmasse Betaseal® 1858-1, (feuchtigkeitshärtender, isocyanat-basierter Klebstoff, handelsüblich erhältlich von Dow Automotive), streifenförmig über die komplette Klarlackschicht der 3C1B-Mehrschichtlackierungen 3W-1 bis 3W-4 in Längsrichtung aufgebracht (ca. 3 mm dick, 10 mm breit). Der Klebstoff wird für 72 h bei 50% Luftfeuchtigkeit und 25 °C ausgehärtet.

Nach vollständiger Aushärtung des Klebstoffs wird ein so genannter Quick-Knife-Test durchgeführt. Dazu werden Schnitte in einem Abstand von jeweils 12 mm vertikal zur Klebemasse angebracht und an der ausgehärteten Klebemasse in Längsrichtung manuell gezogen. Kommt es hierbei ausschließlich zu einem Riss innerhalb der Klebstoffmasse, so wird die Zwischenhaftung Klebstoff / Mehrschicht-Lackierung und damit auch die Scheibenverklebungshaftung als ausreichend beurteilt. Kommt es zu einer Delamination Klebstoff / Klarlack oder einem Bruch innerhalb der Mehrschicht-Lackierung, so ist eine ausreichende Scheibenverklebungshaftung nicht mehr gegeben.

Nach Prüfung der Scheibenverklebung bei Raumtemperatur werden die 3C1B-Mehrschichtlackierungen 3W-1 bis 3W-4 in hydrophiles Baumwollgewebe (Verbandwatte der Fa. Hartmann, Nr. 110406/2) eingewickelt und bei 100% Luftfeuchte für 14 Tage bei 70 °C und anschließend für 2 h bei -20 °C sowie nochmals 2 h bei 23 °C gelagert. Danach wird das Baumwollgewebe entfernt und innerhalb von 2 h mit den belasteten 3C1B-Mehrschichtlackierungen 3W-1 bis 3W-4 der oben beschriebene Quick-Knife-Test durchgeführt. Die Bewertungsskala für die Scheibenverklebungsprüfung umfasst einen Bereich von 1-5, wobei eine Bewertung 1 die komplette Enthaftung entspricht und eine Bewertung 5 einem völligen Bruch in den Scheibenverklebungsmasse entspricht. Die Ergänzung "u" gibt die Trennebene der Enthaftung an, in diesem Falle liegt die Trennebene innerhalb der Primer-Schicht.

In Tabelle 3 sind die Einzelergebnisse zusammengefasst.

**Tabelle 3.: Nassdaten der erfindungsgemäße und Vergleichs-Funktionsschichten F-1 bis F-4.**

| | **Vergleichsbeispiel** | | **Erfindungsgemäße Beispiel** | |
|---|---|---|---|---|
| **Prüfung** | **3W-1** | **3W-2** | **3W-3** | **3W-4** |
| Gitterschnitt | | | | |
| Vor SKK | 0 | 0 | 0 | 0 |
| Nach 240 h 40 °C SKK | 0 | 0 | 0 | 0 |
| Steinschlaghaftung | | | | |
| Vor SKK | 5-6 | 6-7 | 7 | 7 |
| Nach 240h 40 °C SKK | 5 | 5 | 7 | 7 |
| Scheibenverklebung | | | | |
| Nach 5d Raumtemperatur | 5 | 5 | 5 | 5 |
| Nach 14d Cataplasma | 1u | 1u | 5 | 5 |
| Allgemeine Eigenschaften | | | | |
| Verlauf | gut | gut | gut | gut |
| Lackstörungen | nein | nein | nein | nein |

Die in der Tabelle 3 zusammengestellten Ergebnisse untermauern, dass die erfindungsgemäße 3C1 B-Mehrschichtlackierungen 3W-3 und 3W-4 eine hervorragende Scheibenverklebungshaftung aufweisen, die ausgezeichnete Ergebnisse nach Cataplasma Belastung werden von der hydrophoben Natur der Versaticsäure der Epoxy-modifizierte Polyester unterstützt. Die Vergleichsproben 3W-1 und 3W-2 zeigen nach dem Cataplasma-Test einen Bruch in der Funktionsschicht. Dies ist unerwünscht, da die Scheibenverklebungshaftung ein sicherheitsrelevantes Thema ist. Der Motor Vehicle Safety Standards (MVSS) fordert, dass der Klebstoff eine komplette Adhäsion zur Windschutzscheibe und zu der Mehrschichtlackierung aufweist.

Die nicht erfindungsgemäßen 3C1B-Mehrschichtlackierungen 3W-1, deren Funktionsschicht kein Polyester-Bindemittel enthalten, zeigen deutlich schlechtere Steinschlagfestigkeit. Durch Einsatz einer Polyester-Bindemittel wird der Steinschlag verbessert, die 3C1B-Mehrschichtlackierungen 3W-3 und 3W-4 mit Epoxy-modifizierte Polyester ergaben eine hervorragende Steinschlagfestigkeit, und das auch nach Feuchtebelastung.

(*) = Die Patentanmeldung DE102005032346A1 beschreibt Perlglanzpigmente mit vernetzbarer Bindemittelbeschichtung, Beschichtungsmittelzusammensetzung, Verfahren zur Herstellung der beschichteten Perglanzpigmente und deren Verwendung, insbesondere im Bereich der Pulverlacke.

Die Patentanmeldung FR 2870453A2 beschreibt vernetzbare Nagellacke.

Die Patentanmeldung WO2005/063897A2 beschreibt Metallpigmente mit vernetzbarer Bindemittelbeschichtung, Verfahren zur Herstellung der beschichteten Metallpigmente und deren Verwendung, insbesondere im Bereich der Pulverlacke. Die Patentanmeldung WO2005/007762A1 beschreibt Polyurethan-Polymer-Hybrid Dispersionen mit verbesserten Oberflächeneigenschaften, Verfahren zu ihrer Herstellung, sowie deren Verwendung, insbesondere zur permanenten öl- und wasserabweisenden Oberflächenbehandlung.

Die Patentanmeldung FR2791689A1 beschreibt vernetzte Mikropartikel sowie deren Herstellung und Verwendung.

Die Patentanmeldung DE19810220A1 beschreibt ein zur Mehrschichtlackierung geeignetes Überzugsmittel, enthaltend neben organischem Lösemittel, Antiablaufmittel, gegebenenfalls Pigmenten, Füllstoffen und Additiven, Ein Bindemittel/Vernetzer-System, enthaltend A) 20 bis 80 Gew.-% carboxylfunktionelle (Meth)acrylcopolymere und/oder carboxylfunktionelle Polyester, mit einer Säurezahl von 20 bis 300, B) 20 bis 80 Gew.-% epoxidfunktionelle Vernetzer, wobei sich die Gew.-% von A) und B) auf 100 Gew.-% addieren, C) 0 bis 30 Gew.-% Polymerpolyol C), bezogen auf die Summen der Gewichte von A) und B), E) 0 bis 20 Gew.-% weiteren Vernetzer, bezogen auf die Summe der Gewichte von A), B) und C), F) 0 bis 10 Gew.-% Monoepoxide, bezogen auf die Summe der Gewichte von A) und B), D) 0,1 bis 3 Gew.-%, bezogen auf den Harzfestkörper, zuvor in Gegenwart zumindest eines Teils des epoxidfunktionellen Vernetzers B) bereiteter, im Überzugsmittel unlöslicher, fester feinteiliger Harnstoffverbindungen D) als Antiablaufmittel, wobei sich sämtliche Gew.-%-Angaben jeweils auf den Festkörper beziehen.

## Patentansprüche

1. Mehrschichtlackierung, bestehend aus
i. mindestens einer Funktionsschicht A, erhalten aus einer wasserfreien Zusammensetzung, enthaltend
a. mindestens einen gesättigten oder ungesättigten Epoxy-modifizierten Polyester als Bindemittel,
b. mindestens ein Acrylat- oder Polyurethan-Polymer als weiteres Bindemittel,
c. Polymermikroteilchen,
d. mindestens ein Polymer, welches funktionelle Gruppen bestehend aus blockierten Isocyanaten und Aminoplastharzen enthält, als Vernetzungsmittel,
e. mindestens ein Pigment,
f. mindestens ein organisches Lösemittel und
g. mindestens einen Hilfs- oder Zusatzstoff,
wobei der Festkörper der Zusammensetzung mindestens 50 Gew.-% beträgt
ii. mindestens einer Basislackierung B mindestens eines Basislacks und
iii. mindestens einer Klarlackierung C mindestens eines Klarlacks.

2. Mehrschichtlackierung nach Anspruch 1, **dadurch gekennzeichnet, dass** der Polyester mit einem Anteil von 5 bis 20 Gew.-%, bezogen auf das Gesamtgewicht der Zusammensetzung, enthalten ist, und wobei sich die Gewichtsanteile aller Bestandteile zu 100 Gew.-% addieren.

3. Mehrschichtlackierung nach Anspruch 2, **dadurch gekennzeichnet, dass** die Zusammensetzung enthält
a. 5 bis 30 Gew.-% mindestens eines Acrylat- oder Polyurethan-Polymers als weiteres Bindemittel,
b. 5 bis 20 Gew.-% Polymermikroteilchen,
c. 5 bis 15 Gew.-% mindestens eines Polymers, welches funktionelle Gruppen bestehend aus blockierten Isocyanaten und Aminoplastharzen enthält, als Vernetzungsmittel,
d. 5 bis 49,5 Gew.-% mindestens eines Pigments,
e. 30 bis 50 Gew.-% mindestens eines organischen Lösemittels und
f. 0,5 bis 40 Gew.-% mindestens eines Hilfs- oder Zusatzstoffs,
jeweils bezogen auf das Gesamtgewicht der Zusammensetzung.

4. Mehrschichtlackierung nach einem der Ansprüche 1 bis 3, **dadurch gekennzeichnet, dass** der Polyester ein gewichtsmittleres Molekulargewicht von 5000 bis 20000 g/mol aufweist

5. Mehrschichtlackierung nach einem der Ansprüche 1 bis 4, **dadurch gekennzeichnet, dass** die Viskosität einer Auslaufzeit von 24 s bis 30 s aus einem Ford 4 Cup bei 23 °C entspricht.

6. Mehrschichtlackierung nach einem der Ansprüche 1 bis 5, **dadurch gekennzeichnet, dass** nacheinander zunächst die Schicht A, dann die Schicht B und anschließend Schicht C auf ein Substrat aufgebracht und die Schichten A, B und C anschließend gemeinsam gehärtet werden.

7. Mehrschichtlackierung nach einem der Ansprüche 1 bis 6, **dadurch gekennzeichnet, dass** zunächst die Schicht A auf ein Substrat aufgebracht und gehärtet und danach B und schließlich C auf das Substrat aufgebracht und B und C anschließend gemeinsam gehärtet werden

8. Verfahren zur Herstellung einer Mehrschichtlackierung nach einem der Ansprüche 1 bis 7, **dadurch gekennzeichnet, dass** mindestens eine Zusammensetzung, die der Zusammensetzung aus Schritt i. der Ansprüche 1 bis 7 entspricht, auf ein Substrat aufgetragen, anschließend mindestens ein Basislack und anschließend mindestens ein Klarlack aufgetragen werden.

9. Verfahren nach Anspruch 8, **dadurch gekennzeichnet, dass** die Zusammensetzung sowie die Basis- und Klarlacke gemeinsam gehärtet werden.

10. Verwendung der Mehrschichtlackierung nach einem der Ansprüche 1 bis 7 zur Beschichtung von Substraten.

11. Substrat, beschichtet mit einer Mehrschichtlackierung nach einem der Ansprüche 1 bis 8.

## Claims

1. Multicoat paint system composed of
i. at least one functional layer A, obtained from a water-free composition comprising
a. at least one saturated or unsaturated, epoxy-modified polyester as binder,
b. at least one acrylate polymer or polyurethane polymer as further binder,
c. polymer microparticles,
d. at least one polymer comprising functional groups consisting of blocked isocyanates and amino resins, as crosslinking agent,
e. at least one pigment,
f. at least one organic solvent, and
g. at least one auxiliary or additive,
the solids of the composition being at least 50% by weight
ii. at least one basecoat B of at least one basecoat material, and
iii. at least one clearcoat C of at least one clearcoat material.

2. Multicoat paint system according to Claim 1, **characterized in that** the polyester is present with a fraction of 5% to 20% by weight, based on the total weight of the composition, and the weight fractions of all of the constituents add up to 100% by weight.

3. Multicoat paint system according to Claim 2, **characterized in that** the composition comprises
a. 5% to 30% by weight of at least one acrylate polymer or polyurethane polymer as further binder,
b. 5% to 20% by weight of polymer microparticles,
c. 5% to 15% by weight of at least one polymer which comprises functional groups consisting of blocked isocyanates and amino resins, as crosslinking agent,
d. 5% to 49.5% by weight of at least one pigment,
e. 30% to 50% by weight of at least one organic solvent, and
f. 0.5% to 40% by weight of at least one auxiliary or additive,
based in each case on the total weight of the composition.

4. Multicoat paint system according to any of Claims 1 to 3, **characterized in that** the polyester has a weight-average molecular weight of 5000 to 20 000 g/mol.

5. Multicoat paint system according to any of Claims 1 to 4, **characterized in that** the viscosity corresponds to a flow time of 24 s to 30 s from a Ford 4 Cup at 23°C.

6. Multicoat paint system according to any of Claims 1 to 5, **characterized in that** successively first layer A, then layer B, and subsequently layer C are applied to a substrate and then layers A, B, and C are jointly cured.

7. Multicoat paint system according to any of Claims 1 to 6, **characterized in that** first layer A is applied to a substrate and cured and thereafter B and finally C are applied to the substrate, and B and C are then jointly cured.

8. Method of producing a multicoat paint system according to any of Claims 1 to 7, **characterized in that** at least one composition which corresponds to the composition from step i. of Claims 1 to 7 is applied to a substrate, subsequently at least one basecoat material is applied, and subsequently at least one clearcoat material is applied.

9. Method according to Claim 8, **characterized in that** the composition and also the basecoat and clearcoat materials are jointly cured.

10. Use of the multicoat paint system according to any of Claims 1 to 7 for coating substrates.

11. Substrate coated with a multicoat paint system according to any of Claims 1 to 8.

## Revendications

1. Vernissage multicouche, constitué par :
i. au moins une couche fonctionnelle A, obtenue à partir d'une composition anhydre, contenant :
a. au moins un polyester à modification époxy saturé ou insaturé en tant que liant,
b. au moins un polymère d'acrylate ou de polyuréthane en tant que liant supplémentaire,
c. des microparticules polymères,
d. au moins un polymère qui contient des groupes fonctionnels constitués d'isocyanates bloqués et de résines aminoplastes en tant qu'agent de réticulation,
e. au moins un pigment,
f. au moins un solvant organique et
g. au moins un adjuvant ou additif,
la composition contenant au moins 50 % en poids de solides,
ii. au moins un vernissage de base B d'au moins un vernis de base, et
iii. au moins un vernissage transparent C d'au moins un vernis transparent.

2. Vernissage multicouche selon la revendication 1, **caractérisé en ce que** le polyester est contenu en une proportion de 5 à 20 % en poids, par rapport au poids total de la composition, la somme des proportions en poids de tous les constituants étant de 100 % en poids.

3. Vernissage multicouche selon la revendication 2, **caractérisé en ce que** la composition contient :
a. 5 à 30 % en poids d'au moins un polymère d'acrylate ou de polyuréthane en tant que liant supplémentaire,
b. 5 à 20 % en poids de microparticules polymères,
c. 5 à 15 % en poids d'au moins un polymère qui contient des groupes fonctionnels constitués d'isocyanates bloqués et de résines aminoplastes en tant qu'agent de réticulation,
d. 5 à 49,5 % en poids d'au moins un pigment,
e. 30 à 50 % en poids d'au moins un solvant organique et
f. 0,5 à 40 % en poids d'au moins un adjuvant ou additif,
à chaque fois par rapport au poids total de la composition.

4. Vernissage multicouche selon l'une quelconque des revendications 1 à 3, **caractérisé en ce que** le polyester présente un poids moléculaire moyen en poids de 5 000 à 20 000 g/mol.

5. Vernissage multicouche selon l'une quelconque des revendications 1 à 4, **caractérisé en ce que** la viscosité correspond à un temps d'écoulement de 24 s à 30 s à partir d'une coupe de viscosité Ford 4 à 23 °C.

6. Vernissage multicouche selon l'une quelconque des revendications 1 à 5, **caractérisé en ce que** tout d'abord la couche A, puis la couche B et enfin la couche C sont appliquées successivement sur un substrat, puis les couches A, B et C sont durcies ensemble.

7. Vernissage multicouche selon l'une quelconque des revendications 1 à 6, **caractérisé en ce que** la couche A est tout d'abord appliquée sur un substrat et durcie, puis B et enfin C sont appliqués sur le substrat, et B et C sont ensuite durcis ensemble.

8. Procédé de fabrication d'un vernissage multicouche selon l'une quelconque des revendications 1 à 7, **caractérisé en ce qu'**au moins une composition qui correspond à la composition de l'étape i. des revendications 1 à 7 est appliquée sur un substrat, puis au moins un vernis de base, puis au moins un vernis transparent sont appliqués.

9. Procédé selon la revendication 8, **caractérisé en ce que** la composition, ainsi que le vernis de base et le vernis transparent sont durcis ensemble.

10. Utilisation du vernissage multicouche selon l'une quelconque des revendications 1 à 7 pour le revêtement de substrats.

11. Substrat, revêtu avec un vernissage multicouche selon l'une quelconque des revendications 1 à 8.
